# EUROPÄISCHE PATENTSCHRIFT

(11) **EP 1 911 995 B1**
(45) Veröffentlichungstag und Bekanntmachung des Hinweises auf die Patenterteilung: **03.08.2011**
(21) Anmeldenummer: 07117724.0
(22) Anmeldetag: 02.10.2007
(51) Int. Cl.: F16H 57/02

(54) **Anordnung einer Aufbau- und Verbindungstechnik eines Getriebes**
System for the structural design and coupling technology of a transmission
Disposition d'une technique de montage et de liaison d'une transmission

(30) Priorität: 12.10.2006 DE 102006048253
(43) Veröffentlichungstag der Anmeldung: 16.04.2008
(73) Patentinhaber: ZF Friedrichshafen AG, 88038 Friedrichshafen (DE)
(72) Erfinder: Heinzelmann, Karl-Fritz, 88074 Meckenbeuren (DE)

(56) Entgegenhaltungen:
- WO-A-2006/131287
- DE-A1- 4 041 253
- DE-A1- 19 604 957
- DE-A1- 19 710 931

## Beschreibung

Die vorliegende Erfindung betrifft eine Anordnung einer Aufbau- und Verbindungstechnik eines Getriebes nach der im Oberbegriff von Anspruch1 näher definierten Art. Eine solche Anordnung ist aus dem Dokument DE 196 04 957 vorbekannt.

Automatisierte Schaltgetriebe bestehen hinsichtlich ihrer Hauptkomponenten aus konventionellen, gegebenenfalls auch manuell betätigbaren Schaltgetrieben, bei denen das Betätigen der Schalt- und/oder Anfahrkupplung zwischen Antriebsmotor und Getriebe sowie das Wählen und Schalten von Getriebegängen über entsprechende Betätigungsmittel automatisiert erfolgt. Diese Betätigungsmittel sind üblicherweise als hydraulisch oder pneumatisch betätigbare Stellzylinder oder als elektrische Aktuatoren ausgebildet, welche auf Stellmittel für die genannten Getriebefunktionen einwirken. Die Stellmittel können am oder im Getriebe angeordnet sein. Das Hauptgetriebe kann dabei derart ausgebildet sein, dass nur ein Schaltaktuator für die hohen Kraftanforderungen der Schaltvorgänge bei Nkw-Getrieben benötigt wird, da das Anwählen entsprechender Schaltelemente durch einen Wählaktuator mit geringeren Kraftanforderungen realisierbar ist. Zur Erhöhung der Gangzahl des Hauptgetriebes weisen solche Schaltgetriebe noch eine Vorschaltgruppe und/oder eine Nachschaltgruppe auf.

Aus dem Stand der Technik sind Schaltgetriebe bekannt, bei denen das Schalten und Wählen von so genannten Getriebestellern ausgeführt wird. Bei einem Getriebesteller können alle für die Durchführung einer Schaltung notwendigen Betätigungsmittel, Sensoren, (Magnet-)Ventile sowie eine elektronische Steuereinrichtung in einem Mechatronik-Modul zusammengefasst sein. Ein Getriebesteller ist beispielsweise in einer entsprechenden Aussparung eines Getriebegehäuses separat montierbar.

In der nicht veröffentlichten Anmeldung der Anmelderin mit dem Aktenzeichen 10 2005 021 761.3 ist ein Mehrgruppengetriebe offenbart, welches einen Getriebesteller umfasst. Der Getriebesteller ist modular aufgebaut und umfasst ein Sensor-Modul, ein Modul, welches eine Aufbau- und Verbindungstechnik und eine Steuereinheit aufweist, ein Magnetventil-Modul und ein Wählmodul. Die Module sind in einer Getriebetasche angeordnet.

In der nicht veröffentlichten Anmeldung der Anmelderin mit dem Aktenzeichen 10 2006 031 384.4 wird eine Anordnung einer elektronischen Getriebesteuerung eines Getriebes vorgeschlagen, bei der die elektronische Getriebesteuerung fest mit einer Aufbau- und Verbindungstechnik des Getriebes verbunden ist.

In den nicht veröffentlichten Anmeldungen mit den Aktenzeichen 10 2005 021 761.3 und 10 2006 031 384.4 wird ein Getriebestellerdeckel über einen Zwischenflansch der Aufbau- und Verbindungstechnik mit einem Getriebegehäuse verbunden. Am Zwischenflansch der Aufbau- und Verbindungstechnik sind Dichtelemente angeordnet. Ein Dichtelement dient zur Abdichtung der Aufbau- und Verbindungstechnik zum Getriebestellerdeckel, während ein weiteres Dichtelement zur Abdichtung eines Getriebebauraums nach außen dient. Bei einer derartigen Anordnung werden für Verbindungsmittel, beispielsweise Verbindungsschrauben, einzelne Dichtmittel benötigt, um eine sichere Abdichtung zu gewährleisten, was einen fertigungstechnischen Aufwand bedeutet und Kosten verursacht.

Der vorliegenden Erfindung liegt die Aufgabe zugrunde, eine Anordnung einer Aufbau- und Verbindungstechnik eines Getriebes darzustellen, durch welche die Nachteile des Standes der Technik beseitigt werden.

Die der Erfindung zugrunde liegende Aufgabe wird durch eine, auch die kennzeichnenden Merkmale des Hauptanspruchs aufweisende, gattungsgemäße Anordnung einer Aufbau- und Verbindungstechnik eines Getriebes gelöst.

Erfindungsgemäß ist eine Aufbau- und Verbindungstechnik zwischen einem Getriebestellerdeckel und einem Getriebegehäuse, welches einen Getriebebauraum begrenzt, derart angeordnet, dass der Getriebestellerdeckel direkt mit dem Getriebegehäuse verbindbar ist. Diese Verbindung kann beispielsweise über Schraubverbindungen realisiert werden. Zur Abdichtung der Aufbau- und Verbindungstechnik zum Getriebestellerdeckel ist an der Aufbau- und Verbindungstechnik ein Dichtelement angeordnet, während zur Abdichtung des Getriebebauraums nach außen ein Dichtelement zwischen dem Getriebestellerdeckel und dem Getriebegehäuse angeordnet ist. Durch die erfindungsgemäße Anordnung der Aufbau- und Verbindungstechnik und der Dichtelemente werden für die benötigten Verbindungsmittel, beispielsweise Schrauben, keine einzelnen Dichtmittel mehr benötigt, da der Getriebestellerdeckel ohne einen Zwischenflansch der Aufbau- und Verbindungstechnik direkt mit dem Getriebegehäuse verbindbar ist.

Im Folgenden wird das Grundprinzip der Erfindung, welche mehrere Ausführungsformen zulässt, an Hand einer Zeichnung beispielhaft näher erläutert.

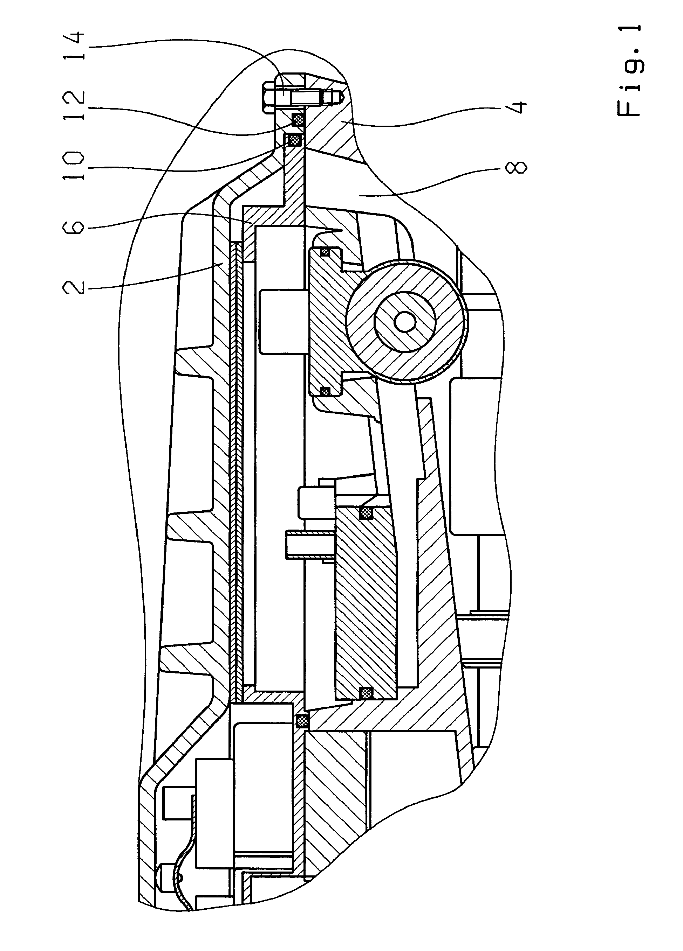

Die einzige Figur zeigt einen Ausschnitt einer Anordnung einer Aufbau- und Verbindungstechnik 6 eines Getriebes. Die Aufbau- und Verbindungstechnik 6 ist zwischen einem Getriebestellerdeckel 2 und einem Getriebegehäuse 4, welches einen Getriebebauraum 8 begrenzt, derart angeordnet, dass der Getriebestellerdeckel 2 direkt mit dem Getriebegehäuse 4 verbindbar ist. Die Aufbau- und Verbindungstechnik 6 ist zwischen dem Getriebestellerdeckel 2 und dem Getriebegehäuse 4 eingeklemmt bzw. formschlüssig fixiert. Die Verbindung von Getriebestellerdeckel 2 und Getriebegehäuse 4 kann beispielsweise über Schraubverbindungen 14 realisiert werden. Die Aufbau- und Verbindungstechnik 6 weist ein Dichtelement 10 auf zur Abdichtung der Aufbau- und Verbindungstechnik 6 zum Getriebestellerdeckel 2. Zwischen dem Getriebestellerdeckel 2 und dem Getriebegehäuse 4 ist ein Dichtelement 12 angeordnet zur Abdichtung des Getriebebauraums 8 nach außen. Die Dichtelemente 10, 12 können beispielsweise aus einem Elastomer-Material bestehen und zum Beispiel als O-Ring, Schnurdichtung oder Flachdichtung ausgebildet sein.

Durch die erfindungsgemäße Anordnung der Aufbau- und Verbindungstechnik 6 und der Dichtelemente 10, 12 werden für entsprechende Schraubverbindungen 14 keine einzelnen Dichtmittel mehr benötigt, um eine sichere Abdichtung zu gewährleisten. Somit können Dichtmittel eingespart und der fertigungstechnische Aufwand und Kosten entsprechend reduziert werden.

### Bezugszeichen

- 2: Getriebestellerdeckel
- 4: Getriebegehäuse
- 6: Aufbau- und Verbindungstechnik
- 8: Getriebebauraum
- 10: Dichtelement
- 12: Dichtelement
- 14: Schraubverbindung

## Patentansprüche

1. Anordnung einer Aufbau- und Verbindungstechnik (6) eines Getriebes zwischen einem Getriebestellerdeckel (2) und einem Getriebegehäuse (4), welches einen Getriebebauraum (8) begrenzt, **dadurch gekennzeichnet, dass** die Aufbau- und Verbindungstechnik (6) zwischen dem Getriebestellerdeckel (2) und dem Getriebegehäuse (4) derart angeordnet ist, dass der Getriebestellerdeckel (2) direkt mit dem Getriebegehäuse (4) verbindbar ist, und dass die Aufbau- und Verbindungstechnik (6) zwischen dem Getriebestellerdeckel (2) und dem Getriebegehäuse (4) eingeklemmt bzw. formschlüssig fixiert ist.

2. Anordnung einer Aufbau- und Verbindungstechnik (6) nach Anspruch 1, **dadurch gekennzeichnet, dass** die Aufbau- und Verbindungstechnik (6) ein Dichtelement (10) aufweist zur Abdichtung der Aufbau- und Verbindungstechnik (6) zum Getriebestellerdeckel (2).

3. Anordnung einer Aufbau- und Verbindungstechnik (6) nach Anspruch 1 oder 2, **dadurch gekennzeichnet, dass** zwischen dem Getriebestellerdeckel (2) und dem Getriebegehäuse (4) ein Dichtelement (12) angeordnet ist zur Abdichtung des Getriebebauraums (8) nach außen.

4. Anordnung einer Aufbau- und Verbindungstechnik (6) nach einem der Ansprüche 1 bis 3, **dadurch gekennzeichnet, dass** der Getriebestellerdeckel (2) über eine Schraubverbindung (14) mit dem Getriebegehäuse (4) fest verbindbar ist.

5. Anordnung einer Aufbau- und Verbindungstechnik (6) nach Anspruch 2 oder 3, **dadurch gekennzeichnet, dass** die Dichtelemente (10, 12) aus einem Elastomer-Material bestehen.

## Claims

1. Arrangement of a structural and connection device (6) of a gearbox between a gearbox actuator cover (2) and a gearbox housing (4) which delimits a gearbox installation space (8), **characterized in that** the structural and connection device (6) is arranged between the gearbox actuator cover (2) and the gearbox housing (4) such that the gearbox actuator cover (2) can be directly connected to the gearbox housing (4), and **in that** the structural and connection device (6) is clamped, or fixed in a positively locking manner, between the gearbox actuator cover (2) and the gearbox housing (4).

2. Arrangement of a structural and connection device (6) according to Claim 1, **characterized in that** the structural and connection device (6) has a sealing element (10) for sealing off the structural and connection device (6) with respect to the gearbox actuator cover (2).

3. Arrangement of a structural and connection device (6) according to Claim 1 or 2, **characterized in that** a sealing element (12) is arranged between the gearbox actuator cover (2) and the gearbox housing (4) in order to seal off the gearbox installation space (8) to the outside.

4. Arrangement of a structural and connection device (6) according to one of Claims 1 to 3, **characterized in that** the gearbox actuator cover (2) can be fixedly connected to the gearbox housing (4) by means of a screw connection (14).

5. Arrangement of a structural and connection device (6) according to Claim 2 or 3, **characterized in that** the sealing elements (10, 12) are composed of an elastomer material.

## Revendications

1. Agencement d'une technique de montage et de liaison (6) d'une transmission entre un couvercle d'actionneur de transmission (2) et un carter de transmission (4), qui limite un espace de construction de la transmission (8), **caractérisé en ce que** la technique de montage et de liaison (6) est disposée entre le couvercle d'actionneur de transmission (2) et le carter de transmission (4) de telle sorte que le couvercle d'actionneur de transmission (2) puisse être connecté directement au carter de transmission (4), et **en ce que** la technique de montage et de liaison (6) est serrée ou fixée par engagement par coopération de forme entre le couvercle d'actionneur de transmission (2) et le carter de transmission (4).

2. Agencement d'une technique de montage et de liaison (6) selon la revendication 1, **caractérisé en ce que** la technique de montage et de liaison (6) présente un élément d'étanchéité (10) pour étanchéifier la technique de montage et de liaison (6) par rapport au couvercle d'actionneur de transmission (2).

3. Agencement d'une technique de montage et de liaison (6) selon la revendication 1 ou 2, **caractérisé en ce qu'**entre le couvercle d'actionneur de transmission (2) et le carter de transmission (4) est disposé un élément d'étanchéité (12) pour étanchéifier l'espace de construction de la transmission (8) vers l'extérieur.

4. Agencement d'une technique de montage et de liaison (6) selon l'une quelconque des revendications 1 à 3, **caractérisé en ce que** le couvercle d'actionneur de transmission (2) peut être connecté fixement au carter de transmission (4) par le biais d'une connexion vissée (14).

5. Agencement d'une technique de montage et de liaison (6) selon la revendication 2 ou 3, **caractérisé en ce que** les éléments d'étanchéité (10, 12) se composent d'un matériau élastomère.
